Europäisches Patentamt

European Patent Office

Office européen des brevets

(19)

(11) Publication number: **0 038 574**
**B1**

(12) **EUROPEAN PATENT SPECIFICATION**

(45) Date of publication of patent specification: **15.06.83**

(51) Int. Cl.³: **G 11 B 21/12, G 11 B 5/54**

(21) Application number: **81103622.7**

(22) Date of filing: **31.07.79**

(60) Publication number of the earlier application in accordance with Art. 76 EPC: **0008670**

(54) Information transducer load control system.

(30) Priority: **31.08.78 US 938727**

(43) Date of publication of application:
**28.10.81 Bulletin 81/43**

(45) Publication of the grant of the patent:
**15.06.83 Bulletin 83/24**

(84) Designated Contracting States:
**DE FR GB**

(56) References cited:
IBM TECHNICAL DISCLOSURE BULLETIN, vol. 18, no. 7, December 1975, NEW YORK (US) E. L. BAILEY et al.: "Read/write head load-unload device", pages 2246—2247
IBM TECHNICAL DISCLOSURE BULLETIN, vol 21, no. 2, July 1978, NEW YORK (US) J. F. HOLSTEEN Jr.: Head load protect circuit", pages 770—776
PATENT ABSTRACTS OF JAPAN, vol. 1, no. 30, 29th March, 1977, page 1037. E. 77

(73) Proprietor: **International Business Machines Corporation**
**Armonk, N.Y. 10504 (US)**

(72) Inventor: **Lavgren, Jeffrey Lynn**
**1503 19th Street N.E.**
**Rochester Minnesota 55901 (US)**
Inventor: **Quinlan, William Patrick**
**3714 21st Avenue N.W.**
**Rochester Minnesota 55901 (US)**

(74) Representative: **Petersen, Richard Courtenay**
**IBM United Kingdom Patent Operations Hursley Park**
**Winchester Hants. SO21 2JN (GB)**

Courier Press, Leamington Spa, England.

# Information transducer load control system

This invention relates to an information transducer load control system in which a transducer is movable by motor means from an inoperative position separated from a moving information carrying medium towards the medium into an operative information transfer position, and including a capacitor, the voltage on which is capable of regulating the current through the motor means.

Such a control system is disclosed in IBM Technical Bulletin, Vol. 18, No. 7, December 1975, pages 2246 and 2247. A pair of transducers are loaded by electrical energisation of a solenoid from an inoperative position separated from a rotating magnetic disk into contact with the disk. The solenoid coil is in series with a voltage source, a current limiting resistor and a transistor, and is in parallel with a capacitor and series resistor. When the transistor is rendered conductive, voltage is impressed across the coil of the solenoid and across the capacitor and series resistor. The current through the solenoid coil rises rapidly to bring the transducer heads into contact with the disk.

The invention is particularly, but not exclusively, applicable to magnetic disk drive machines, which regulate the application of magnetic heads to the disks.

In a typical previous disk drive machine, the magnetic head is held off the disk by a spring. An electric solenoid is energized, when desired, to overcome the spring force and to bring the head into contact with the disk. If the disk is of the type encased in a protective jacket, such as is disclosed in US—A—3,668,658, the machine also includes a pressure member which is actuated by the solenoid to clamp the disk-jacket assembly to hold it in a correct predetermined plane for reliable data transfer. When the system is correctly electrically rated to handle tolerances of the head-solenoid connections and this additional task of compression of the disk-jacket assembly, the solenoid rapidly accelerates the head towards the disk. It has been noted experimentally that the rate of magnetic oxide erosion on the surface of the disk contacted by the magnetic head is very sensitive to and increases with the head impact velocity, as the head is accelerated by solenoid energisation.

Accordingly, the invention is characterised in that the control system is connected to the motor means initially to energise the motor means to move the transducer towards and close to the medium during a first phase, at a relatively rapid rate, subsequently to change the energisation of the motor means to regulate the current therethrough in accordance with the voltage on the capacitor to move the transducer into engagement with the medium during a second phase at a relatively slow rate, and, after the second phase is effective, to change the energisation of the motor means to apply a relatively rapidly increased pressure on the transducer during a third phase.

By this means, the transducer is moved rapidly into a close spatial relationship with the medium, but is moved relatively slowly into contact therewith, thus reducing the impact velocity and the chances of damage. After contact has been established and the risk of damage due to high impact velocity has been removed, the necessary strong pressure of the transducer against the medium is established quickly.

It is convenient to use an electrically energisable solenoid as the motor means.

In the described embodiment of the invention, a transducer load control system applies a magnetic head to a magnetic disk, in such a way as first rapidly to take out the mechanical slack in the head applying system, then in a subsequent operation to move the magnetic head very slowly into contact with the disk, and thereafter quite rapidly to increase the head pressure on the disk.

In the load control system of the embodiment, an electrically energisable solenoid causes movement of the magnetic head into contact with the disk in accordance with energization of the solenoid. The system includes a switch which is closed at the time of confluence of a free running oscillator output pulse and a head load command signal, which is continuous once raised, for initiating a rapid energization phase of the solenoid. The solenoid in this phase takes the slack out of the mechanical connections between it and the head and moves the head into very close proximity with the disk. The system also includes a capacitor the charge on which builds up from a source of voltage at the confluence of the oscillator pulse and head load command signal, and is changed to control subsequent applications of voltage to the solenoid to cause similar variations in solenoid current, reducing the charging rate of the capacitor in a subsequent phase of operation and causing a corresponding reduced rate of current increase in the solenoid, during which phase the solenoid causes the magnetic head to impact the disk, the impact being very gradual to minimise head and disk wear.

The system provides a subsequent abrupt final charging of the capacitor, and the solenoid current increases abruptly during this phase to cause the head pressure on the disk to be finally established.

Because the confluence of the head load command signal and output pulse of a free running oscillator is used for initiating head engagement, the final head engagement occurs at different points on the disk, assuming that data of one form or another is derived from the disk for raising the load head command signal.

This feature is the subject of application 79102718.8 (EP—0008670) from which the present application is divided.

The scope of the invention is defined by the appended claims; and how it can be carried into effect is hereinafter particularly described with reference to the accompanying drawings, in which:—

Figure 1 is a schematic illustration of a magnetic head load control system in which the invention is incorporated;

Figure 2 is a schematic illustration of part of Figure 1 with the switch controlling logic in more detail; and

Figures 3A and 3B, when assembled as shown in Figure 3, constitute a timing diagram showing the voltages and current on various lines of the circuit of Figure 2 and the condition of various switch transistors in Figure 2 during operation of the system.

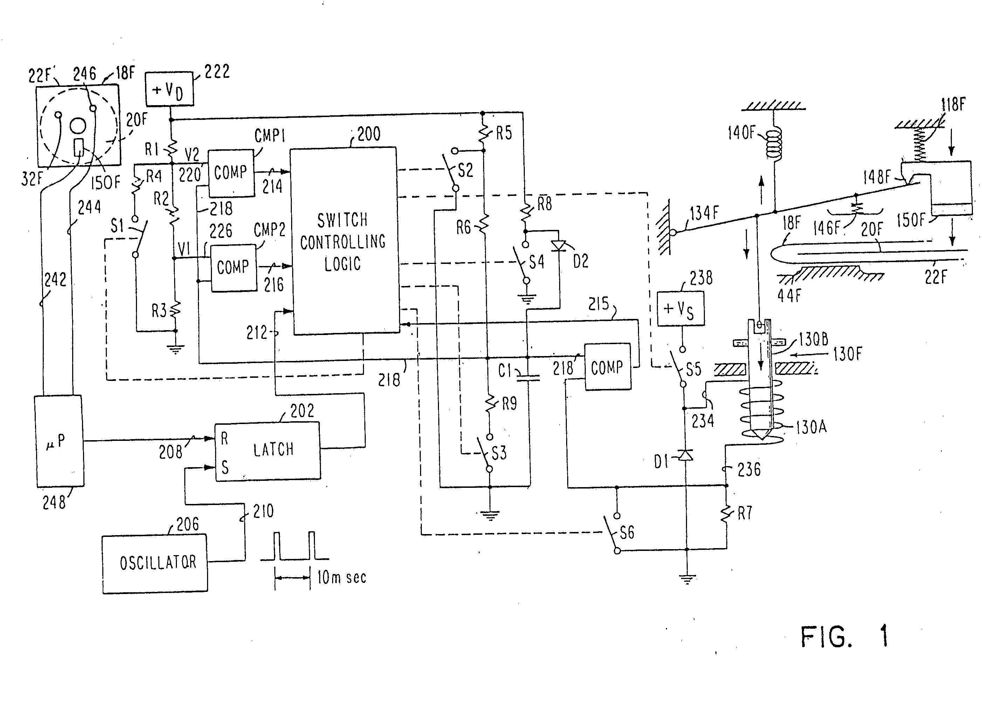

An embodiment of the invention is hereinafter described as applied to a head load control system for a disk drive machine as disclosed in US—A—4,089,029. Certain parts of the machine shown in Figure 1 have been given the same reference numbers as are used for corresponding parts of the machine disclosed in the patent specification, but with the addition of the suffix F. The head load control system and disk drive machine are adapted to be used in connection with a disk assembly 18F which is shown in two places in Figure 1 for ease of illustration of the circuitry. The assembly 18F includes a magnetic disk 20F rotatably disposed in a jacket 22F. The disk 20F has an index hole 32F in it adapted to cooperate with appropriate photoelectric apparatus to produce an index or timing pulse once for each revolution of the disk 20F. The disk assembly 18F is disposed between a platen 44F and a pressure member 146F. The pressure member 146F is actuated by a pivoted lever or bail 134F which is moved by an electromagnet 130F against the action of a return spring 140F. The electromagnet 130F is shown schematically as including a coil 130A which encircles a movable armature or plunger 130B.

An electromagnetic head or transducer 150F is movable from above a single selected track on the disk 20F towards the disk 20F in order to have a data transferring relationship with respect to the track. A spring 118F is effective to move the transducer 150F towards the disk 20F, and the transducer 150F is provided with a hook 148F which overlies the end of lever 134F so that, when the lever 134F is pivoted clockwise (Figure 1), the spring 118F is effective to move the transducer 150F into contact with the disk 20F. Although only the single transducer 150F is shown, another opposed transducer effective on the other side of the disk 20 may be provided, if desired, as disclosed in US—A—4,089,029. The parts of the machine are illustrated diagrammatically in Figure 1 and reference may be made to US—A—4,089,029 for further details. The head load control system comprises resistors R1, R2, R3, R4, R5, R6, R7, R8 and R9, switches S1, S2, S3, S4, S5 and S6, diodes D1 and D2, capacitor C1, comparators CMP1, CMP2 and CMP3, switch controlling logic 200, latch 202 and oscillator 206.

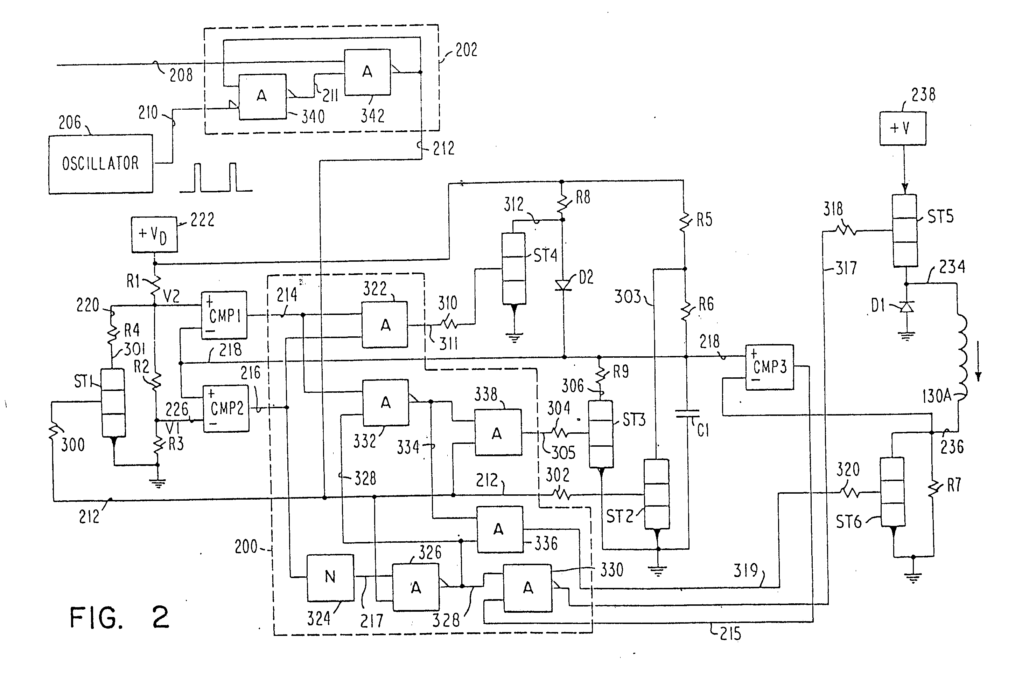

The switch controlling logic 200 is shown in Figure 1 as having dotted line connections with switches S1 to S6. These switches may if desired actually be switching transistors, and details of the logic 200 for controlling such transistors is shown in Figure 2 and will be subsequently described in detail.

The head load control system is under the control of a microprocessor 248 which receives information derived from the disk 20F during its rotation. When the disk assembly 18F is used in the disk drive machine, the head 150F provides data read from the disk 20F on a line 242 to the microprocessor 248. The data on line 242 occurs cyclically with rotation of disk 20F. A series of index pulses (one for each 360° of rotation of disk 20F) is derived from the index hole 32F in the disk 20F by a photoelectric detector 246 that is responsive to light passing through hole 32F as disk 20F rotates and supplied along line 244 to the microprocessor 248. The microprocessor 248 provides a head load command signal on line 208.

Operation of the head load control system is initiated by the head load command signal on line 208 which is applied to the reset terminal of latch 202. Oscillator 206 is a free running oscillator and provides a pulse output every 10 msec on line 210 which is connected to the set terminal of latch 202. The output of latch 202 is a delayed head load command signal on line 212, and this constitutes an input to the switch controlling logic 200. The outputs of comparators CMP1, CMP2 and CMP3 respectively on lines 214, 216 and 215 also constitute inputs to the switch controlling logic 200. A regulator control voltage is provided by capacitor C1 on line 218, and this line constitutes an input to each of the comparators CMP1, CMP2 and CMP3.

A source 222 of voltage $V_D$ is connected to earth through resistors R1, R2 and R3 in series. There is a parallel shunt path across resistors R2 and R3 comprising resistor R4 and switch S1 in series. A voltage V2 is applied along line 220 as the second input to comparator CMP1 from between resistors R1 and R2. A voltage V1 is applied along line 226 as the second input to comparator CMP2 from between resistors R2 and R3.

The voltage source 222 is also connectible to earth through resistors R5, R6, R9 and switch S3 in series. The switch S2 is in a parallel shunt path across resistors R6 and R9 and switch S3. The line 218 is connected to between resistors R6 and R9 and to one side of capacitor C1 whose other side is connected to earth. The voltage source 222 is also connectible to earth through resistor R8 and switch S4 in series. The junction between resistor R8 and switch S4 is connected to line 218 through diode D2.

A source 238 of voltage $V_s$ is connectible to earth through switch S5, line 234, solenoid coil 130A, line 236, and resistor R7. Diode D1 is connected between line 234 and earth. Line 236 is the second input to comparator CMP3 and is connectible to earth by switch S6 in parallel with resistor R7.

In Figure 2, the head load control system is shown in greater detail with the switches S1 to S6 constituted by switching transistors ST1 to ST6 with associated current limiting resistors. NPN type transistor ST1 has its collector connected to resistor R4 by line 301 and its base to line 212 by resistor 300. NPN type transistor ST2 has its collector connected to between resistors R5 and R6 by line 303 and its base to line 212 by resistor 302. NPN type transistor ST3 has its collector connected to resistor R9 by line 306 and its base to line 305 from logic 200 through resistor 304. NPN type transistor ST4 has its collector connected to resistor R8 by line 312 and its base connected to line 311 from logic 200 through resistor 310. NPN type transistor ST6 has its collector connected to line 236 and its base connected to line 319 from logic 200 through resistor 320. The emitters of transistors ST1 to ST4 and ST6 are connected to earth. PNP type transistor ST5 has its emitter connected to voltage source 238, its base connected through resistor 318 to line 317 from logic 200, and its collector connected to line 234.

Logic 200 includes AND circuits 322, 326, 330, 332, 336 and 338 and inverter 324. AND circuit 322 has two inputs on lines 214 and 216 from comparators CMP1 and CMP2, respectively, and an output on line 311 to the base of transistor ST4. AND circuit 326 has two inputs, one on line 212 from latch 202, and the other on line 217, the output from inverter 324 whose input is on line 216 from comparator CMP2. The output of AND circuit is on line 328 which provides inputs to AND circuits 330, 332 and 336. AND circuit 330 has a second input on line 215 from comparator CMP3, and an output on line 317 to the base of transistor ST5. AND circuit 332 has a second input on line 214 from comparator CMP1, and an output on line 334 which provides inputs to AND circuits 336 and 338. AND circuit has two inputs on lines 328 and 334 and an output on line 319 to the base of transistor ST6. AND circuit 338 has a second input on line 212 from latch 202 and an output on line 305 to the base of transistor ST3.

Latch 202 includes two AND circuits 340 and 342. AND circuit 340 has two inputs, one on line 210 from oscillator 210 and the other on line 212, and an output on line 211 which provides one input to AND circuit 342. AND circuit 342 has a second input on line 208 from microprocessor 248 (Figure 1), and an output on line 212 to logic 200 and the bases of transistors ST1 and ST2.

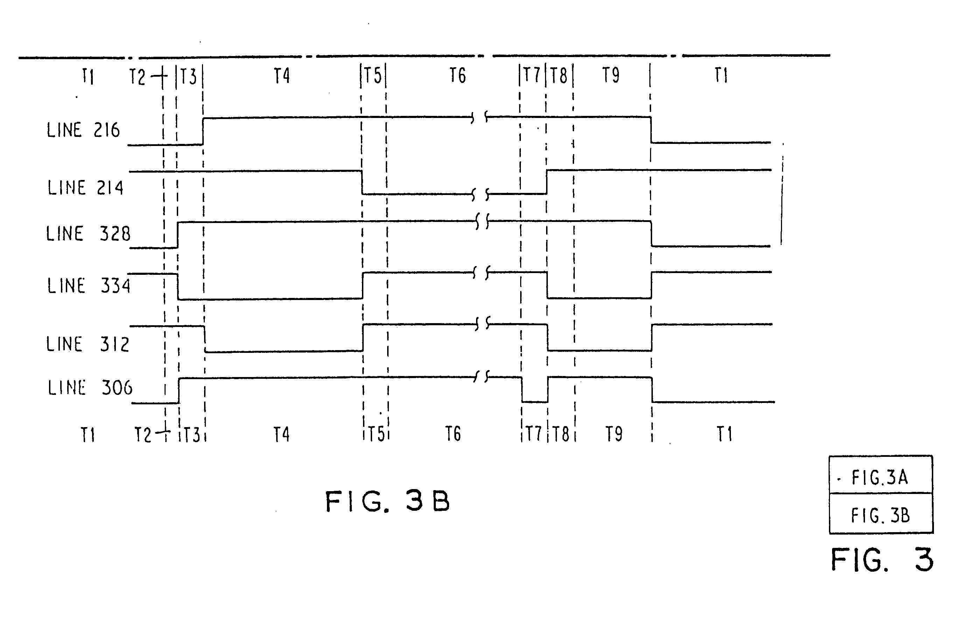

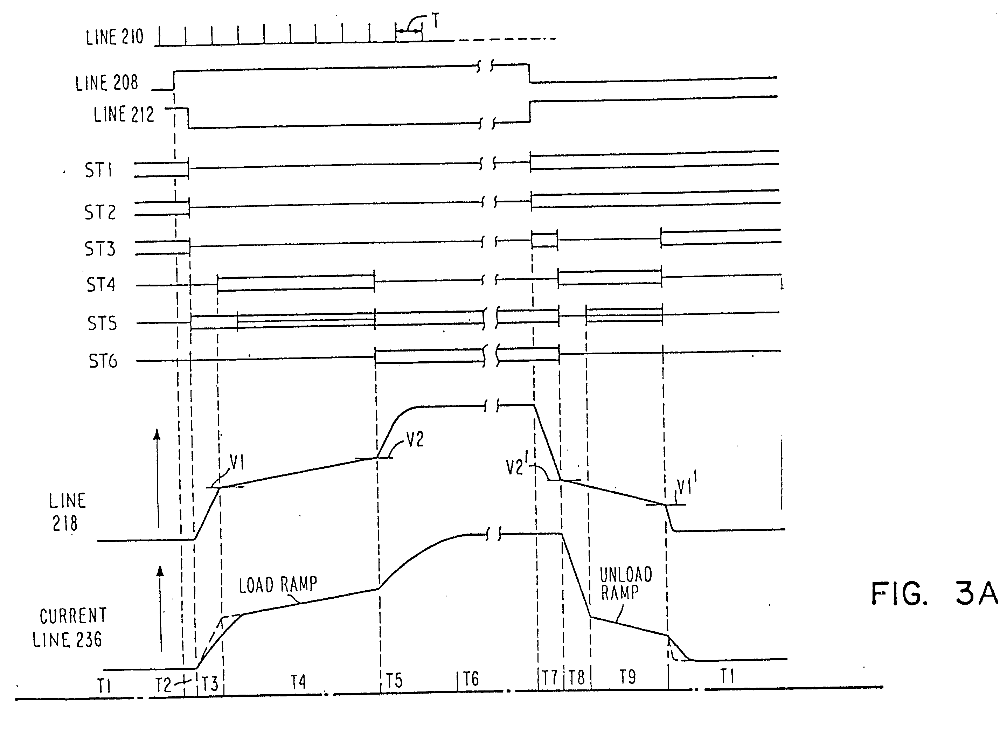

The operation of the head control system will be described with reference to Figures 3A and 3B, which form a timing diagram illustrating voltages and currents in various lines and the conditions of the various switching transistors at various times during the operation of the head load control system. The operation of loading and unloading the head 150F occurs during time periods T1, T2, T3, T4, T5, T6, T7, T8 and T9. Time period T1 is that time period prior to the raising of the head load command signal on line 208. During this time period, the oscillator 206 provides oscillator pulses on line 210 connected to the set terminal of latch 202 and one input to AND circuit 340. These oscillator pulses occur at intervals of time T. The condition of transistors ST1 to ST6 is indicated by a single line if non-conducting (switch open), by a double line if conducting (switch closed) and by a triple line if the condition oscillates (switch alternately open and closed).

Transistors ST1, ST2, ST3 and ST4 (switches S1, S2, S3 and S4) control the charging and discharging of capacitor C1, and the charge on capacitor C1 controls the magnitude of current through the solenoid winding 130A at times determined by transistors ST5 and ST6 (switches S5 and S6). Transistor ST4 (switch S4) controls a quick charge of capacitor C1. Transistors ST2 and ST3 (switches S2 and S3) control discharging of capacitor C1. Transistor ST1 (switch S1) changes the end points of charging and discharging of capacitor C1. Transistor ST5 (switch S5) directly controls the current flow through solenoid winding 130A, and transistor ST6 (switch S6) indirectly controls changes of magnitude of the current in solenoid winding 130A.

Some of the transistors are under the control of the comparators CMP1, CMP2 and CMP3. Each comparator is so constructed that it provides an up level output signal when the voltage on the plus terminal of the comparator is higher than that on the minus terminal of the comparator and provides a down output signal when the opposite is true. The transistor ST1 is directly under the control of the signal on line 212 and is opened at the beginning of time period T3 by the dropping of the signal on line 212. The transistor ST1 influences the functioning of the comparators CMP1 and CMP2 and particularly the voltages at which the comparators switch; and, since the transistor ST1 is non-conductive at this time, the comparators CMP1 and CMP2 are uninfluenced by the resistor R4 which is in series with the transistor ST1. The resistors R1, R2 and R3 function as a voltage divider, being located between the voltage source 222 and earth, and thus provide biasing voltages on the plus and minus terminals respectively of the comparators CMP1 and CMP2. This voltage divider in particular provides voltages V2 and V1 respectively on the lines 220 and 226 (with transistor ST1 non-conductive) which are impressed on the comparators CMP1 and CMP2. At the beginning of time period T3, the voltage on line 218 connected to comparators CMP1 and CMP2 is zero, and therefore the comparator CMP2 has a down output on its output line 216. For the same reason, the comparator CMP1 provides a high output on its output line 214 at this time.

The transistor ST4 in particular is responsible for an initial quick charging of the capacitor C1 that occurs during the time period T3, and the transistor ST4 is rendered non-conductive for this purpose and ceases to earth the junction between resistor R8 and diode D2. A quick charge current flows from the voltage source 222 through resistor R8 and diode D2 to line 218 and to capacitor C1 when transistor ST3 is non-conductive. The resistors R5 and R6 are relatively large and are shunted by the relatively small resistor R8 and diode D2. The voltage on line 218 thus rapidly increases during time period T3.

During time period T1, the absence of a signal on line 208 which is an input to AND circuit 342 causes the output on line 212 to be at an up level which conditions transistors ST1 and ST2 to be conductive (switches S1 and S2 closed). Comparator CMP1 compares the voltages on lines 220 and 218 and the output is an up level on line 214. Comparator CMP2 compares the voltages on lines 226 and 218 and the output is a down level on line 216. AND circuit 322 with up and down levels on input lines 214 and 216 has a down level output on line 311 so that transistor ST4 is non-conductive (switch S4 open).

AND circuit 326 has up levels on input lines 212 and 217, the latter from inverter 324, so that there is a down level output on line 328. AND circuit 332 has up and down levels on input lines 214 and 328, respectively, so that there is an up level output on line 334. AND circuit 338 has up levels on input lines 334 and 212, so that there is an up level output on line 305 and the transistor ST3 is conductive (switch S3 closed).

AND circuit 330 has a down level on input line 328, so that there is an up level output on line 317 and the transistor ST5 is non-conductive (switch S5 open). AND circuit 336 has up and down levels on input lines 334 and 328, respectively, so that there is down level on line 319 and the transistor ST6 is non-conductive (switch S6 open).

When a head load command signal is applied to line 208 between pulses on line 210, time period T2 begins. AND circuit 340 has up and down levels on input lines 212 and 210, so that there is a down level on line 211 and the AND circuit 342 continues to have an up level output on line 212.

Time period T2 ends when the next pulse arrives from oscillator 206 on line 210. Thus time period T2 is of variable length, depending upon the time of arrival of head load command signal on line 208 in relation to pulses on line 210. The arrival of a pulse on line 210 starts time period T3. The pulse on line 210 sets the latch 202 by providing an up level on input line 210 to AND circuit 340, so that there is an up level on output line 211. AND circuit 342 has up levels on input lines 208 and 211, so that there is a down level on output line 212. The down level on line 212 ensures that AND circuit 340 is not satisfied so that latch 202 remains set with AND circuit 342 satisfied. Through the logic 200, the conditions of transistors ST1, ST2, ST3 and ST5 are changed. With a down level on line 212, transistors ST1 and ST2 are rendered non-conductive (switches S1 and S2 open). With a down level on line 212, AND circuit 326 is no longer satisfied and there is an up level on line 328. AND circuit 332 has up level on input lines 214 and 328, so that there is a down level on output line 334. AND circuit 338 has down levels on input lines 334 and 212, so that is a down level on line 305 and transistor ST3 is rendered non-conductive (switch S3 open). AND circuit 322 remains unsatisfied because of the down level on line 216, so that transistor ST4 remains non-conductive (switch S4 open). AND circuit 336 has up and down levels on input lines 328 and 334, respectively, so that transistor ST6 remains non-conductive (switch S6 open).

With transistor ST3 non-conductive (switch S3 open) resistor R9 is no longer connected to earth and voltage from the voltage source 222 is applied to line 218 to allow charging of capacitor C1 through diode D2 and resistor R8. The voltage on line 218 applied to the comparator CMP3 causes the comparator to raise the level on line 215, because the voltage at the junction of winding 130A and resistor R7 is initially at earth potential, so that AND circuit 330 is satisfied by up levels on input lines 215 and 328 and the resultant down level on line 317 renders the transistor ST5 conductive (switch S5 closed). With the transistor ST5 conductive, voltage from the voltage source 238 is applied to solenoid winding 130A which is connected to earth in series with resistor R7 As capacitor C1 charges, the voltage on line 218 increases abruptly on a straight line basis as shown in Figure 3A, and the solenoid current in winding 130A also rises rapidly but not as fast as the voltage on line 218 as shown in Figure 3A. Because transistor ST1 is non-conductive during time period T3, the voltage on line 218 rises directly to its value V1 determined by comparator CMP2. The rise of the solenoid current in line 236 during time period T3 is somewhat slower than the voltage rise on line 218 during this time period due to the inductance and resistance of winding 130A. The current causes the solenoid 130F to apply a force on lever 134F and against spring 140F so that the magnetic head 150F moves toward disk 20F.

When the rapidly rising voltage on line 218 and applied to capacitor C1 reaches and exceeds the value of V1, the logic 200 closes switch S4 to earth the junction of resistor R8 and diode D2 and end the time period T3. When the capacitor C1 has been charged to and exceeds the voltage V1 on line 226, the output of comparator CMP2 rises to up level and AND circuit 322 is satisfied by up levels on input lines 214 and 216. The resultant up level on line 311 renders the transistor ST4 conductive (switch S4 closed). The up level on line 216 inverted by inverter 324 to a down level on line 217 has no effect on the AND circuit 326 which remains unsatisfied.

During the subsequent time period T4, the capacitor C1 continues to be charged, but more slowly through resistors R5 and R6. The conductive transistor ST4 connects the junction between the resistor R8 and the diode D2 to earth, stopping the fast charging of capacitor C1. Diode D2 is then back biased due to the charge on capacitor C1 and has no current flowing through it. During the time period T4, all the charging current for the capacitor C1 passes through the resistors R5 and R6 to the capacitor C1. The resistors R5 and R6 are relatively high value resistors so that the charging current through capacitor C1 is quite limited. The voltage on line 218 thus during this time period T4 increases relatively slowly from value V1 to value V2 as shown in Figure 3A. The voltage V2 is determined by comparator CMP1. The current in line 236 through solenoid winding 130A increases and the voltage at the junction between the winding and the resistor R7 rises, until it reaches the increasing voltage on line 218. At this time the output of the comparator CMP3 on line 215 drops and causes AND circuit 330 to give an up level on output line 317 to render the transistor ST5 non-conductive (switch S5 open). This disconnects the voltage source 238 from the solenoid winding 130A and there is a momentary cessation of current. The voltage across resistor R7 falls and the output of the comparator CMP3 on line 215 rises and renders the transistors ST5 conductive again. The transistor ST5 oscillates quickly between its conductive and non-conductive states so that the effective comparator CMP3 current in solenoid winding 130A slowly rises at the same rate as the control voltage on line 218.

During time period T4, the force of the solenoid armature 130B on the lever 134F is very slowly increased (in accordance with the slow increase of solenoid current in line 236 during this time period), thus moving the head 150F slowly into contact with the disk 20F and then slowly increasing the pressure of the head. At the end of this time period T4, when the voltage on line 218 has risen to the value V2, the force of the solenoid armature 130B on the lever 134F has been increased to a point in which the magnetic head 150F is in full contact with the disk 20F.

When the voltage on line 218 has risen to the value V2, the output of the comparator CMP1 goes to its down level on line 214. AND circuit 322 is no longer satisfied and transistor ST4 is rendered non-conductive (switch S4 open) by the down level on line 311. AND circuit 332 is also no longer satisfied and the resultant up level on line 334 coupled with an up level on line 328 satisfies AND circuit 336 which raises the line 319 to an up level to render the transistor ST6 conductive (switch S6 closed).

At the end of time period T4 and the beginning of time period T5, the non-conductive condition of the transistor ST4 causes a rapid charging of capacitor C1, referred to above. During such fast charging of the capacitor C1, the current flows from the voltage source 222 through resistor R8 and diode D2 as in time period T3, the relatively large resistors R5 and R6 again being shunted by the resistor R8 and diode D2. This causes the voltage on line 218 to increase rapidly to a maximum during this time period T5. As the transistor ST6 is conductive, resistor R7 is shorted out so that the voltage on line 236 drops to 0 volts. Comparator CMP3 renders the transistor ST5 conductive, and the voltage source 238 having a full uninterrupted connection with solenoid winding 130A causes the current in the winding 130A to increase rapidly during this time period T5 but at a lower rate than the increase of voltage on line 218 due to the inductance of winding 130A.

At the end of time period T5 and the beginning of time period T6, the voltage on line 218 has levelled off at the maximum and the current in winding 130A reaches a maximum, nearly all the voltage of source 238 is applied to and across the solenoid winding 130A because resistor R7 is shorted out. During time periods T5 and T6, transistor ST6 is conductive to short out the feedback resistor R7, the minus terminal of comparator CMP3 being held at earth potential. Transistor ST6 is under the control of the output on line 317 of AND circuit 336 which in turn is controlled by the signal on line 334 and the signal on line 328. The signal on line 328 is and remains high for the reasons previously mentioned. The signal on line 334 is under the control of the comparator CMP1 which has its output go low at the end of time period T4, because the voltage on line 218 exceeds the voltage V2. The AND circuit 332 has the output of the comparator CMP1 as an input, and AND circuit 332 therefore is not satisfied at this time and produces a high signal on line 334. Because the signals on both of the lines 328 and 334 applied as inputs to the AND circuit 336 are high, the AND circuit 336 provides a signal on line 319 to render the transistor ST6 conductive. As a result, the pulling force by the solenoid 130F on the lever 134F is maximized during time period T6 and the head 150F is thus applied with its maximum force on the disk 20F with no contact between the lever 134F and hook 148F (Figure 1). The pressure member 146F on the lever 134F has a clamping action with respect to the disk assembly 18F corresponding to the movement of the lever 134F by the solenoid 130F. Thus, the clamping action by the pressure member 146F on the disk assembly 18F increases during time periods T3, T4 and T5 and is maximized during time period T6 in accordance with the increases of solenoid current in line 236 during these time periods. The disk 20F is thus held clamped in its proper plane for data transfer between disk 20F and head 150F.

During time period T6, transistors ST5 and ST6 remain conductive and transistor S4 non-conductive. The charge on the capacitor C1 and the solenoid current are at maximum, and the magnetic head 150F is full loaded onto the disk 20F. The time period T6 can go on indefinitely, as long as it is desired that the head 150F shall remain loaded on the disk 20F.

Unloading of the head 150F with respect to the disk 20F is initiated by lowering the Head Load Command signal on line 208 to its down level, thus beginning time period T7. Latch 202 is thus reset, and the signal on line 212 goes high. The switch controlling logic 200 on this change of the signal on line 212, renders the transistors ST1, ST2 and ST3 conductive (switches S1, S2 and S3 close). The transistors ST1 and ST2 are rendered conductive under the direct control of the signal on line 212. The AND circuit 338 has as inputs the line 212 and the line 334. The signal on the line 334 remains high, because the inputs to AND circuit 332 are under the influence of the outputs from comparators CMP1 and CMP2 which do not change state at this time. The AND circuit 338 is therefore satisfied and the transistor ST3 is rendered conductive, acting as a quick discharge switch to discharge the capacitor C1 through line 218 to earth from its highest voltage value to a voltage V2' at the end of time period T7. The transistor ST4, which provides a quick charge on the capacitor C1, remains non-conductive. For this reason, the resistance of the resistor R9 is considerably less than that of the resistor R8, and the discharging action of the transistor ST3 exceeds the charging effect of the transistor ST4.

The transistors ST5 and ST6 remain conductive and the solenoid current remains at its high level until the end of the time period T7.

The effect of the transistor ST1 becoming conductive at the beginning of time period T7 is to reduce the voltages on the lines 220 and 226 by shunting the resistor R4 across the resistors R2 and R3. The voltages on the lines 220 and 226 constitute the biasing voltages on the comparators CMP1 and CMP2 so that these comparators switch at the lower voltages V2' and V1' instead of the voltages V2 and V1, respectively, at which corresponding switching of the comparators took place at the beginning and end of the time period T4. At the end of time period T7, the voltage on line 218 is at the value V2', which is less than the voltage value V2 because the input to the comparator CMP1 is influenced by the conductive transistor ST1. Comparator CMP1 senses when the control voltage on line 218 reaches the value V2', thus terminating time period T7 and beginning time period T8, with the output on line 214 rising to an up level.

At this time comparator CMP1 switches so that it provides a high output on its output line 214. The AND circuit 322 therefore is satisfied at this time so that the transistor ST4 is rendered conductive and ceases to have an effect on the charging of capacitor C1. The increased signal on line 214 is also effective on the AND circuit 332 so as to satisfy the AND circuit 332 and lower the signal on line 334. The AND circuit 338 is then not satisfied, rendering the transistor ST3 non-conductive, so that the quick discharging action on the capacitor C1 ceases. The reduced signal on line 334 also has the effect of causing the AND circuit 336 to be unsatisfied, and this has the effect of rendering the transistor ST6 non-conductive so that the resistor R7 is in series to earth from the solenoid winding 130A. The current through the solenoid winding 130A then flows through the resistor R7 producing a voltage drop across this resistor. At the beginning of time period T8, this voltage drop is greater than the voltage V2' on line 218 and the comparator CMP3 therefore has a low output. AND circuit 330 therefore is not satisfied and produces a high output which is applied to the transistor ST5 to render it non-conductive. The current therefore quickly drops in the solenoid winding 130A as shown in Figure 3A. Conductive transistor ST2 is then effective in connection with resistor R5 to provide a slow discharge of capacitor C1 so that the voltage on line 218 reduces from the value V2' towards the value V1'.

At the end of time period T8 and the beginning of time period T9, the current in the solenoid 130A has reduced to a value which corresponds to a voltage drop across resistor R7 equal to the then existing reduced voltage on the capacitor C1 and line 218. At this time, as the voltage on line 218 exceeds that on line 236, the comparator CMP3 raises the output on line 215 so that the AND circuit 330 lowers its output on line 317 and renders the transistor ST5 conductive. This causes the current in the solenoid winding 130A temporarily to cease decreasing and thus increases the voltage on line 236 above that on line 218. The comparator CMP3 drops its output on line and the transistor ST5 is rendered non-conductive, allowing the solenoid current to decrease again. The condition of the transistor ST5 oscillates between conductive and non-conductive whilst the solenoid current decreases at the same rate as the voltage on line 218 until the voltage V1' is reached, at the end of time period T9. The engaging force on the head 150F with respect to the disk 20F varies with the solenoid current, and thus the engaging force is gradually reduced during time period T9.

At the end of the time period T9, the voltage on the line 218 reaches V1' and as it falls below, the comparator CMP2 switches, producing a low output on its output line 216. The AND circuit 322 therefore is not satisfied, and the transistor ST4 turns non-conductive. This condition initially provided a fast charge of the capacitor C1, but is not effective because the conductive transistor ST3 provides a quicker discharge. The low level signal on line 216 produces a low signal on line 328 by means of inverter 324 and AND circuit 326, and this has the effect of causing the AND circuit 332 to be unsatisfied so as to produce a raised signal on line 334. The AND circuit 338 is thus satisfied so as to render the transistor ST3 conductive. The signal levels on the lines 328 and 334 are respectively low and high at the end of time period T9, and the AND circuit 336 therefore is not satisfied. The transistor ST6 therefore remains non-conductive at this time. The signal level on line 328, however, is low so that the AND circuit 330 is not satisfied. The output of the AND circuit 330 therefore is high, and this has the effect of opening the switch S5. The conductive transistor ST3 causes the voltage on the capacitor C1 to decrease rapidly to zero as shown in Figure 3A, and the non-conductive transistor ST5 disconnects the voltage source 238 from the solenoid winding 130A, so that the current in the winding 130A rapidly reduces to zero, corresponding to a full disengagement of the head 150F with the disk 20F. Diode D1, immediately after transistor ST5 is rendered non-conductive, limits the negative voltage excursion of the line 234 to one diode drop below earth and conducts any transient current during this time.

Engagement of the magnetic head 150F with the disk 20F is initiated when the Head Load Command signal on line 208 is up and when a subsequent oscillator pulse occurs on line 210. The delay between command and actual initiation of the head engaging action may vary within the time period T of the oscillator 206 which may be 10 milliseconds, for example. The Head Load Command signal on line 208 may be initiated by the index pulse which appears on line 244 once for every revolution of disk 20F. Therefore, actual initiation of engagement of head 150F on disk 20F may take place any time within the time period T following the index pulse on line 244, and this corresponds with a certain partial revolution of disk 20F. Assuming, for example, that it requires 167 milliseconds for disk 20F to make a complete revolution and the time period T between oscillator pulses is 10 milliseconds, the head 150F may be engaged with the disk 20F within a 22° sector on the disk 20F.

In the event that head-disk engagement is timed with respect to certain data supplied from disk 20F on the read data line 242, the Head Load Command signal on line 208 may be raised by microprocessor 246 on the existence of this data; and, in this case, initiation of engagement of the head 150F with respect to the disk 20F will occur randomly within the time period T following the raising of the read data signal on line 242.

The main purpose of the resistor R7 is to function as a device for measuring the current flow through the solenoid winding 130A. When the solenoid winding is carrying an increasing current, the voltage drop across resistor R7 increases and *vice versa*. The voltage drop is used as one input to comparator CMP3, which at times is able to rapidly oscillate the condition of the transistor ST5 to regulate the current flow through the solenoid winding 130A. At such times, the transistor ST6 in parallel with the resistor R7 is non-conductive.

The voltage on line 328 is the general control for the transistor S5 and when high allows the transistor S5 to become conductive to provide current through the solenoid winding 130A. The voltage on line 334 is a general control for the transistor S6 and when high, at the same time as the voltage on line 328, permits resistor R7 to be shorted. The voltage on line 312, when high, allows the fast charge of capacitor C1. The voltage on line 306, when low, causes the fast discharge of capacitor C1.

The force exerted by the solenoid 130F moves the lever or bail 134F which in turn allows the magnetic head 150F to move or moves the head, carrying with it the pressure plate 146F. The slowly rising LOAD RAMP solenoid current in solenoid winding 130A, corresponding to the rise from V1 to V2 of the charge on the capacitor C1, is to cause a very slow engagement of the magnetic head 150F on the disk 20F during the critical part of the head engaging action for substantially reducing the wear of the head and disk. The gradually decreasing UNLOAD RAMP solenoid current is used so as to cause the head 150F to be gradually disengaged from the disk 20F so that the magnetic head 150F does not oscillate and rebound back onto the disk 20F during disengagement causing undue disk and head wear. Such oscillation could possibly occur if the head suspension system of U.S. Patent Specification No. 4,089,029, and particularly the gimbal springs 176 and 184 for head mounting are used. Such a gradual de-application of the head 150F with respect to the disk 20F also assures that such gimbal springs are not so roughly treated as to break.

The voltages V2' and V1' are respectively lower than the voltages V1 and V2, and the UNLOAD RAMP solenoid current is lower than the LOAD RAMP solenoid current due to the electromagnetic hysteresis of the solenoid 130F. The solenoid 130F has a so-called "keeper" effect in which the armature 130B tends to remain in a solenoid energized position, and the current for pulling the armature 130B in a direction to engage the head 150F with the disk 20F is greater than the solenoid current allowing movement of the armature 130B in the opposite direction. Advantageously, the head load controller provides a random delay (0 to 10 milliseconds, uniformly distributed, if the oscillator period T is 10 milliseconds, for example) to be introduced to spread the impact points of the head 150F on the disk 20F randomly over a certain sector, which is slightly less than 22°, assuming that the period of revolution of disk 20F is 167 milliseconds, for example. It is assumed that the head engaging operation is initiated at a certain rotative position of the disk, such as by an index pulse derived from the disk. This reduces the oxide erosion of the magnetic coating on the disk 20F, because the head 150F rarely contacts the disk at the same place consecutively.

The capacitor C1 is charged at three different rates, so that the voltage on the capacitor increases abruptly during time period T3, increases gradually during time period T4 and then again increases abruptly during time period T5. These voltage variations may be considered proportional with time, because they are controlled by increasing the charge on capacitor C1 in a controlled manner. The current in solenoid winding 130A and in line 236 is caused to increase in much the same manner and with the same steps. This differential application of current to the winding 130A ensures that during time period T3 the slack is taken out of the head engaging system, and the head 150F is moved into close proximity with disk 20F, that during time period T4 the head 150F is gradually brought into contact with the disk 20F and during the subsequent time period T5 the pressure on the head 150F is increased until it is in full engagement with the disk 20F. the wear of the head 150F on the disk 20F due to the engagement of the head 150F on the disk is reduced to a minimum, because the head 150F is moved gently during the time period T4 and only after contact between the head and disk has been established is the solenoid 130F turned on full.

## Claims

1. Information transducer load control system in which a transducer (150F) is movable by motor means (130F) from an inoperative position separated from a moving information carrying medium (20F) towards the medium into an operative information transfer position, and including a capacitor (C1) the voltage on which is capable of regulating the current through the motor means, characterised in that the control system is connected to the motor means initially to energise the motor means to move the transducer towards and close to the medium during a first phase at a relatively rapid rate, subsequently to change the energisation of the motor means to regulate the current therethrough in accordance with the voltage on the capacitor to move the transducer into engagement with the medium during a second phase at a relatively slow rate, and after the second phase, is effective, to change the energisation of the motor means to apply a relatively rapidly increased pressure on the transducer during a third phase.

2. A system according to claim 1, including means (R8, R5, R6, S4, ST4) to connect the capacitor (C1) with a voltage source (222) in different arrangements during the respective phases so that the voltage builds up on the capacitor at a relatively slow rate during the second phase.

3. A system according to claim 1 or 2, in which the motor means (130F) includes an electrically energisable solenoid (130A) and the control system includes means (S5, ST5) for initially connecting a voltage source (238) with the solenoid so that the current in the solenoid rises at a rapid rate, subsequently connecting the source and solenoid so that the current increases at a relatively slow rate, and, subsequent to the relatively slow rate of increase of current, connecting the source and solenoid so that the current increases rapidly in the solenoid.

4. A system according to claim 3, in which the regulating means includes a resistor (R7) connected in series with the solenoid (130A) as to have a voltage drop across it proportional to the current through the solenoid and connected to a comparator (CMP3) so as to impress the voltage across the resistor on the comparator for comparison with the capacitor voltage which is impressed on the comparator, and a switch (S5, ST5) in series with the solenoid and controlled by the output of the comparator so that the switch is alternately opened and closed, whereby the current through the solenoid increases substantially in accordance with the increase in voltage on capacitor during the second phase.

5. A system according to claim 3 or 4, in which the control system includes electrical resistor means (R5, R6) in series with the capacitor to control the charging of the capacitor when the regulating means is operative, switching means (S4, ST4) for shunting the resistor means effectively in and out of the circuit with the capacitor, and voltage responsive means (CMP2) responsive to the voltage on the capacitor to cause the switching means to effectively connect the resistor means in series with the capacitor above a predetermined voltage (V1) on the capacitor.

6. A system according to claim 5, in which the control system includes another voltage responsive means (CMP1) responsive to the voltage on the capacitor and effective on the switching means to cause the switching means to shunt the resistor means from the capacitor, when the voltage on the capacitor has increased to a higher level (V2) than the predetermined voltage.

7. A system according to claim 4, 5 or 6, in which the resistor (R7) in series with the solenoid has a switch (S6, ST6) in parallel shunt operable to allow a faster increase of solenoid current during the third phase.

**Revendications**

1. Système de commande de charge de transducteur d'information dans lequel un transducteur (150F) est déplaçable par un moyen moteur (130F) d'une position de repos écartée d'un milieu porteur d'information mobile (20F) vers le milieu vers une position de transfert d'information active et comprenant un condensateur (C1) dont la tension aux bornes est capable de réguler le courant dans le moyen moteur, caractérisé en ce que le système de commande est initialement connecté au moyen moteur, pour l'exciter afin d'entraîner le transducteur vers et à proximité du milieu pendant une première phase à une vitesse relativement rapide, puis pour modifier l'excitation du moyen moteur afin de réguler le courant dans ce dernier selon la tension aux bornes du condensateur pour amener le transducteur en engagement avec le milieu pendant une deuxième phase à une vitesse relativement lente, et, après la réalisation de la deuxième phase, pour modifier l'excitation du moyen moteur afin d'appliquer une pression croissant relativement rapidement au transducteur pendant une troisième phase.

2. Un système selon la revendication 1, comprenant des moyens (R8, R5, R6 S4, ST4) pour connecter le condensateur (C1) à une source de tension (222) dans différents agencements pendant les phases respectives de façon que la tension s'accroisse aux bornes du condensateur à une vitesse relativement lente pendant la deuxième phase.

3. Un système selon la revendication 1 ou 2 dans lequel le moyen moteur (130F) comprend un solenoïde à excitation électrique (130A) et le système de commande comprend des moyens (S5, ST5) pour connecter initialement une source de tension (238) au solenoïde de façon que le courant dans le solenoïde augmente à une vitesse rapide, puis pour connecter la source et le solenoïde de façon que le courant augmente à une vitesse relativement lente, et à la suite de l'accroissement du courant à une vitesse relativement lente, pour connecter la source et le solenoïde de façon que le courant augmente rapidement dans le solenoïde.

4. Un système selon la revendication 3 dans lequel le moyen de régulation comprend une résistance (R7) connectée en série au solenoïde (130A) de façon à présenter une chute de tension à ses bornes, proportionnelle au courant dans le solenoïde et connectée à un comparateur (CMP3) de façon à appliquer la tension aux bornes de la résistance au comparateur pour comparaison avec la tension aux bornes du condensateur qui est appliquée au comparateur, et un commutateur (S5, ST5) en série avec le solenoïde et commandé par la sortie du comparateur de façon que le commutateur soit alternativement ouvert et fermé, ce qui fait que le courant dans le solenoïde augmente substantiellement selon l'augmentation de la tension aux bornes du condensateur pendant le deuxième phase.

5. Un système selon la revendication 3 ou 4, dans lequel le système de commande comprend des résistance électriques (R5, R6) en série avec le condensateur pour commander la charge du condensateur lorsque le moyen de régulation est en fonctionnement, des moyens de commutation (S4, ST4) pour mettre effectivement en parallèle ou non les résistances et le condensateur, et des moyens sensibles à la tension (CMP2) sensible à la tension aux bornes du condensateur pour provoquer par l'intermédiaire des moyens de commutation, le connexion effective des résistances en série avec le condensateur au-dessus d'une tension prédéterminée (V1) aux bornes du condensateur.

6. Un systèm selon la revendication 5, dans lequel le système de commande comprend un autre moyen sensible à la tension (CMP1) répondant à la tension aux bornes du condensateur et commandant les moyens de commutation pour provoquer la mise en parallèle des résistances par les moyens de commutation à partir de la capacité, lorsque la tension aux bornes du condensateur passe à un niveau plus élevé (V2) que la tension prédéterminée.

7. Un système selon la revendication 4, 5 ou 6 dans lequel la résistance (R7) en série avec le solenoïde comporte un commutateur (S6, ST6) en parallèle, fonctionnant pour permettre une augmentation plus rapide du courant dans le solenoïde pendant la troisième phase.

**Patentansprüche**

1. System zur Steuerung der Position eines Informationsübertragers, in dem ein Übertrager (150F) durch einen Motor (130F) aus einer von einem sich bewegenden Informationsträger (20F) getrennten Ruhestellung zur Informationsübertragung in eine Arbeitsstellung auf den Informationsträger zu bewegt wird, und der durch den Motor fließende Strom über eine an einen Kondensator (C1) angelegte Spannung geregelt werden kann, dadurch gekennzeichnet, daß das Steuersystem am Anfang mit dem Motor so verbunden ist, daß der Motor in einer ersten Phase zur Bewegung des Übertragers mit relative hoher Geschwindigkeit auf den Informationsträger zu und dicht an diesen heran erregt, anschließend die Erregung des Motors so geändert wird, daß der durch den Motor fließende Strom entsprechend der Spannung am Kondensator geregelt und der Übertrager während einer zweiten Phase mit relative niedriger Geschwindigkeit in Eingriff mit dem Informationsträger gebracht wird und nach Wirkung der zweiten Phase die Erregung des Motors so geändert wird, daß er während einer dritten Phase einen relativ schnell ansteigenden Druck auf den Übertrager ausübt.

2. System nach Anspruch 1, mit Einrichtungen (R8, R5, R6, S4, ST4) zur Verbindung des Kondensators (C1) mit einer Spannungsquelle (222) in verschiedenen Anordnungen während der entsprechenden Phasen, so daß sich die Spannung am Kondensator während der zweiten Phase mit relative niedriger Geschwindigkeit aufbaut.

3. System nach Anspruch 1 oder 2, in dem der Motor (130F) eine elektrisch erregbare Magnetspule (130A) und das Steuersystem Einrichtungen (S5 ST5) enthalten, um am Anfange eine Spannungsquelle (238) mit der Magnetspule so zu verbinden, daß der Strom in der Magnetspule schnell ansteigt, anschließend die Stromquelle und die Magnetspule so zu verbinden, daß der Strom relativ langsam ansteight und nach dem relativ langsamen Anstieg des Stromes Stromquelle und Magnetspule so zu verbinden, daß der Strom in der Magnetspule schnell ansteigt.

4. System nach Anspruch 3, in dem die Regeleinrichtung einen mit der Magnetspule (130A) in Reihe geschalteten Widerstand (R7) enthält, um einen dem Strom durch die Magnetspule proportionalen Spannungsabfall zu bekommen, und mit einem Vergleicher (CMP3) so verbunden ist, daß die Spannung über dem Widerstand an dem Vergleicher angelegt wird um mit der ebenfalls angelegten Kondensatorspannung verglichen zu werden, und in dem ein Schalter (S5, ST5) mit der Magnetspule in Reihe geschaltet und durch das Ausgangssignal des Vergleichers so gesteuert ist, daß er abwechselnd öffnet und schließt, wodurch der durch die Magnetspule fließende Strom im wesentlichen mit dem Anstieg der Spannung am Kondensator während der zweiten Phase ansteigt.

5. System nach Anspruch 3 oder 4, in dem das Steuersystem elektrische Widerstände (R5, R6) in Reihe mit dem Kondensator zur Steuerung der Ladung des Kondensators beim Arbeiten der Regeleinrichtung, Schalter (S4, ST4) zum effektiven Ein- und Ausschalten der Widerstände in dem Kondensatorkreis und eine spannungsempfindliche Einrichtung (CMP2) enthält, die auf die Spannung am Kondensator anspricht und so auf die Schalter einwirkt, daß der Widerstand effektiv in Reihe mit dem Kondensator oberhalb einer bestimmten Spannung (V1) am Kondensator geschaltet wird.

6. System nach Anspruch 5, in dem eine weitere spannungsempfindliche Einrichtung (CMP1) auf die Spannung am Kondensator anspricht und den Schalter so betätigt, daß der Widerstand aus dem Kondensatorkreis ausgeschaltet wird, wenn die Spannung am Kondensator auf einen höheren Wert (V2) als die vorgegebene Spannung angestiegen ist.

7. System nach Anspruch 4, 5 oder 6, in dem der mit der Magnetspule in Reihe geschaltete Widerstand (R7) einen in parallelem Nebenschluß zu betätigenden Schalter (S6, ST6) aufweist, mit dem man während der dritten Phase den durch die Magnetspule fließenden Strom schneller ansteigen lassen kann.

FIG. 1

0 038 574

FIG. 2

0 038 574

FIG. 3B

FIG. 3A
FIG. 3B

FIG. 3

0 038 574

FIG. 3A